# EUROPEAN PATENT APPLICATION

(11) **EP 1 666 722 A1**
(43) Date of publication of application: **07.06.2006**
(21) Application number: 04380246.1
(22) Date of filing: 02.12.2004
(51) Int. Cl.: F03D 1/00

(54) **Fixing system for floating wind generators**

(71) Applicant: Servicios de Ingenieria y Montaje, Alen, S.L., 15701 Santiago de Compostela, La Coruna (ES)
(72) Inventor: Casas Tojo, Castor, 15701, Santiago de Compostela, La Coruña (ES)
(74) Representative: Carvajal y Urquijo, Isabel

(57) **Abstract**

A fixing system for floating wind generators, in which attached to the base (10) of the shank (1) a submerged structure (3) is arranged, configured to provide floatability to the wind turbine (9), said submerged structure (3) is configured to act as a guide member for a cable (5) connecting the base (10) with at least one central anchoring member (6). A plurality of buoys (2) is arranged in the vicinity of the wind generator (9), each one of which is connected to independent anchoring members (7) on one hand by means of catenary cables (8) and to the base (10) on the other hand by means of respective cables (11) and they are situated around the shank (1) at a given distance therefrom.

## Description

### OBJECT OF THE INVENTION

The present invention refers to a fixing system for floating wind generators of the type situated at a given distance from the coast and comprising a series of members for maintaining the turbine stable against the movements caused by the sea currents, such as, for example, the rotational, lateral, and capsizing movements of the wind generator with regard to its base.

### BACKGROUND OF THE INVENTION

Renewable energies, and particularly wind energy, have experienced an important development in recent years, particularly in reference to land-based wind turbine technologies. Nevertheless, the force of the wind is usually greater in areas close to the coast, and on the sea, where there is no unevenness of the terrain interrupting the action of the wind, therefore this being an ideal site for the installation of wind generators.

Today, the main drawbacks of floating wind installations lie in aspects which are not related to the turbines themselves, but rather to the installation, foundation, support, and maintenance systems.

Currently, the fixed foundation of these wind installations and of other similar installations situated in deep areas is carried out in several manners: gravity seating, by means of concrete or steel anchors, piles, tripods, or similar installations.

The common feature of these systems is that they can only be used in a cost-effective manner for installing wind generators in sites where sea depth does not exceed 25 m.

In the systems known by the current state of the art, the way to avoid shifts of the wind generator in the horizontal plane, sinking, and capsizing, is carried out through foundations which are usually anchored to the sea floor and are connected to the wind generator itself.

In this case, three possible types of movements of the wind generator can occur when it is floating due to the flotation itself and the sea currents.
- sinking of the wind generator,
- lateral shifts, and
- capsizing of the wind generator.

As a result of the foregoing, it has become necessary to develop a simple, firm fixing system for wind generators installed floating, which serves for any depth and which tries to control the described three types of movement of the wind generator, making its buoyancy in the sea stable enough for an effective operation thereof.

This objective is achieved by means of the invention as it is defined in claim 1; preferred embodiments of the invention are defined in the dependent claims.

### DESCRIPTION OF THE INVENTION

The present invention relates to a fixing system for floating wind generators, which wind generator has a shank projecting from the water. The system is characterized in that attached to the base of the shank a submerged structure is arranged, configured to provide floatability to the wind generator such that a waterline is defined in the vicinity of the base of said shank. Said submerged structure is configured to act as a guide member for a cable connecting the base with a central anchoring member. Furthermore, arranged in the vicinity of the wind generator is a plurality of buoys, each one of which is connected on one hand to independent anchoring members by means of catenary cables, and on the other hand to the base by means of respective cables situated around the shank at a given distance therefrom, being configured to exert a given radial stress on the base of the wind generator.

Minimizing the previously discussed three possible types of movements is thus achieved.

Firstly, to avoid sinking, a submerged structure is provided which is directly connected to an anchoring member, and due to the buoyant force of the assembly, a tensional force between the wind generator and the anchoring member occurs, causing the cable connecting them both to be tightened, which contributes to maintaining said assembly at the required depth usually coinciding with sea level.

Secondly, to prevent lateral shifts, a series of perimetral buoys is arranged at sea surface level which radially pull on the shank of the wind generator, maintaining the wind generator in the same position at all times. Said buoys are in turn anchored to a series of anchoring members for the purpose of maintaining their position at all times. Furthermore, as a result of the placement of said perimetral buoys, the rotational shaft of the assembly is shifted to sea surface level, therefore the capsizing torque which occurs is notably reduced, being similar to that of a land-based wind generator.

Finally, to prevent capsizing, a submerged structured joined to the shank is provided, sized such that it acts as an underwater lever.

Likewise, for the purpose of immobilizing the lower point of said submerged structure, at least one central anchoring member is used, although several could be used, where appropriate.

Both central anchoring member and the anchoring members of the buoys can take on different configurations, as can be moorings of any nature, such as concrete moorings, for example, fixed directly to the sea floor, anchors, or even suction devices.

As regards the particular configuration of the submerged structure, it could be of any shape, always bearing in mind that its dimensions will be such that they prevent capsizing of the assembly. Taking this into account, the submerged structure could have, for example, an inverted shank shape.

The submerged structure could furthermore be provided with at least one float, the main task of which will be to collaborate in increasing the floatability of the assembly. Likewise, a plurality of floats could be arranged, depending on the particular conditions of each case.

As regards the specific arrangement of the buoys with regard to the wind generator, an advantageous arrangement thereof will consist in situating them as previously mentioned around the wind generator at a given constant distance for all the buoys, the latter being situated equidistantly from one another.

To conclude, each one of the buoys associated to a generator could be shared by at least one other wind generator of the same wind farm, being able to define a "network" of buoys which are used by several wind generators at the same time.

The simplicity of the developed method of fixing the wind generator floating in the water facilitates the installation thereof in the case of floating wind farms, since the moorings and/or buoys can be shared by several machines with the resulting savings this implies.

### BRIEF DESCRIPTION OF THE DRAWINGS

Very briefly described below is a series of drawings aiding to better understand the invention and which are expressly related to preferred embodiments of said invention which are shown as illustrative and non-limiting examples thereof.

Figure 1 shows an elevational view of a system for floating wind generators according to the present invention.

Figure 2 corresponds to a plan view of said system for floating wind generators according to the present invention.

### DESCRIPTION OF A PREFERRED EMBODIMENT OF THE INVENTION

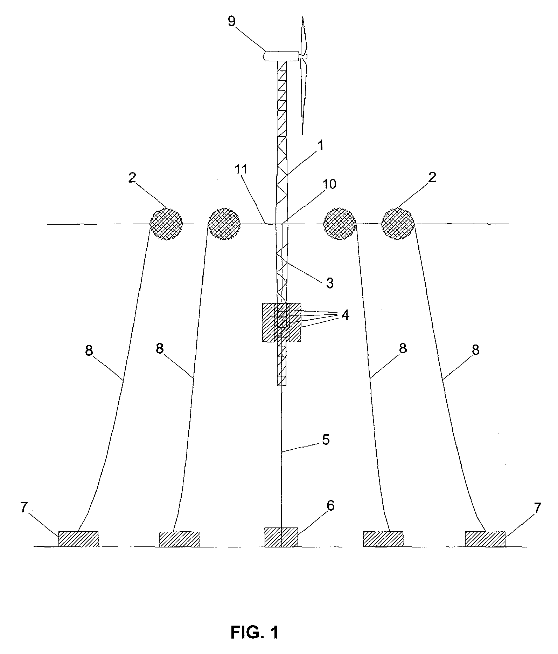

In the fixing system for floating wind generators object of the present invention, as shown in Figure 1, wind generator 9 has a shank 1 projecting from the surface of the water and having a submerged portion, which in turn has a submerged structure 3, which is configured to prevent the sinking of the wind generator, the waterline of the assembly being established in the vicinity of the base 10 of the shank 1.

The submerged structure 3 is connected to an anchoring member 6 arranged on the sea floor, the joining between both members is achieved through a cable 5, the structure 3 being configured to act as a guide member for said cable 5. In the case of the present embodiment of the invention, a submergible structure 3 with an inverted shank shape, which is hollow, has been defined, and said cable 5 passes through the inside thereof.

To prevent the rotation or capsizing, it is possible to install a reinforced pipe running through the inside of the submerged structure and through which cable 5 passes, which is tightened with regard to the central anchoring 6, oversized to withstand the buoyant force of the assembly. The function of said pipe reinforced with cable 5 is to reduce the swaying movement of the assembly, since it keeps the lower point of the submerged structure 3 fixed.

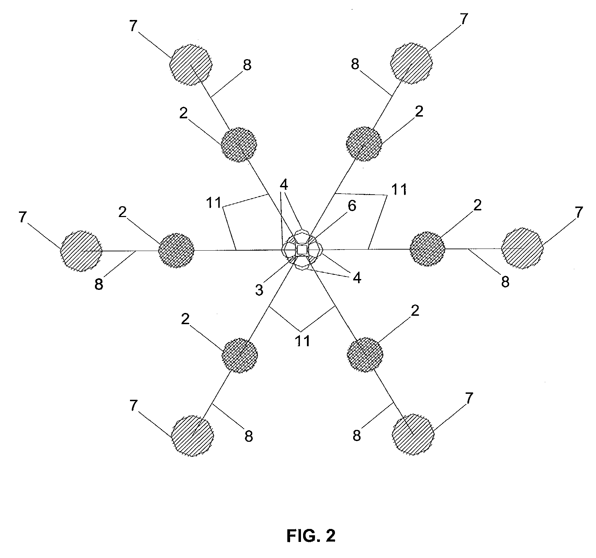

The lateral shifts of the shank 1 are controlled through a plurality of perimetral buoys 2, situated in the vicinity of wind generator 9, which are anchored to the sea floor by means of anchoring members 7 fixed with catenary cables 8 and which at the same time are joined to the base 10 of the shank 1 by means of cables 11 which can be tightened by means of capstans, as shown in Figure 2. In the present embodiment, the buoys 2, as can be seen in Figure 2, are placed at the same distance from the base 10 of the shank and equidistant to one another.

With this arrangement, the various buoys 2 exert a given radial stress on the base 10 of the shank 1 and the rotational or capsizing axis of the shank is situated on the base 10.

The central anchoring member 6 and the anchoring members 7 of the buoys 2 can adopt a wide variety of configurations, in the case of the present embodiment of the invention, they consist of moorings of those typically used in this type of sea anchors, there being able to consist, for example, of anchors or suction systems.

Additionally, at least one additional floater 4 can be arranged on the submerged structure 3 itself, which contributes to changing the waterline of the assembly and to ensure flotation thereof should the structure 3 not be sufficient. Sizing of the different floaters 4 is carried out such that the tension of cable 5 is ensured at all times.

Figures 1 and 2 show the system for the case of a single wind generator 9, however, each one of the buoys associated to a wind generator could be shared by at least one other generator of the same wind farm, a spatial structure of buoys which are used by several wind generator at the same time being able to be defined, thus saving costs both in buoys and in anchoring members.

## Claims

1. A fixing system for floating wind generators, which wind generator (9) has a shank (1) projecting from the water, **characterized in that** attached to the base (10) of the shank (1) a submerged structure (3) is arranged, configured to provide floatability to the wind generator (9) such that a waterline is defined in the vicinity of the base (10) of the shank (1), **in that** said submerged structure (3) is configured to act as a guide member for a cable (5) connecting the base (10) with at least one central anchoring member (6), and **in that** a plurality of buoys (2) is arranged in the vicinity of the wind generator (9), each one of which is connected to independent anchoring members (7) on one hand by means of catenary cables (8) and to the base (10) on the other hand by means of respective cables (11) and are situated around the shank (1) at a given distance therefrom, being configured to exert a given radial stress on the base (10) of the wind generator (9).

2. A system according to claim 1, **characterized in that** the central anchoring member (6) and the anchoring members (7) of the buoys (2) consist of moorings.

3. A system according to claim 1, **characterized in that** the central anchoring member (6) and the anchoring members (7) of the buoys (2) consist of anchors.

4. A system according to claim 1, **characterized in that** the central anchoring member (6) and the anchoring members (7) of the buoys (2) consist of suction devices.

5. A system according to any of the previous claims, **characterized in that** the structure (3) has an inverted shank shape.

6. A system according to any of the previous claims, **characterized in that** the structure (3) has at least one floater (4) which is configured to collaborate in the floatability of the assembly.

7. A system according to any of the previous claims, **characterized in that** the buoys (2) making up the plurality of buoys (2) associated to a wind generator (9) are situated at an equal distance from the shank (1) and equidistant to one another.

8. A system according to any of the previous claims, **characterized in that** at least one of the buoys (2) constituting the plurality of buoys (2) associated to a wind generator (9) is situated such that it is shared by at least one other wind generator of a floating wind park.
